# EUROPEAN PATENT SPECIFICATION

(11) **EP 2 693 623 B1**
(45) Date of publication and mention of the grant of the patent: **01.03.2017**
(21) Application number: 12779367.7
(22) Date of filing: 11.04.2012
(51) Int. Cl.: H02M 1/44, H02M 5/458

(54) **POWER CONVERTER CIRCUIT, AND AIR CONDITIONER**
STROMUMRICHTERSCHALTUNG UND KLIMAANLAGE DAMIT
CIRCUIT CONVERTISSEUR DE COURANT ET CLIMATISEUR

(30) Priority: 02.05.2011 JP 2011103231
(43) Date of publication of application: 05.02.2014
(73) Proprietor: Daikin Industries, Ltd., Osaka 530-8323 (JP)
(72) Inventor: ISHIZEKI, Shinichi, Kita-ku, Osaka-shi, Osaka 530-8223 (JP); SATOU, Toshiaki, Kita-ku, Osaka-shi, Osaka 530-8323 (JP)
(74) Representative: Goddar, Heinz J.
(86) International application number: PCT/JP2012/002502
(87) International publication number: WO 2012/150646

(56) References cited:
- EP-A2- 2 686 951
- WO-A2-2012/127851
- JP-A- 9 117 139
- JP-A- 63 148 859
- JP-A- H07 198 154
- JP-A- 2001 339 980
- JP-A- 2003 143 890
- JP-A- 2003 143 890
- JP-A- 2004 236 370
- JP-A- 2004 236 370

## Description

### Technical Field

The present invention relates to a power converter circuit and an air conditioner and, particularly, to a technique for reducing an impact of noise, which is generated by a converter circuit that converts AC power inputted from an AC power supply into DC power or different AC power, on an auxiliary circuit such as a control power supply circuit.

### Background Art

Conventionally, an air conditioner or the like uses, for example, a power converter circuit which supplies power to a heavy electric load such as a motor and a control power supply circuit which supplies power to a light electric load such as a control circuit (refer to Patent Document 1 below). In recent years, as the power converter circuit, an active converter circuit which is a rectifier circuit using a switching element, an inverter circuit which converts DC power converted by the rectifier circuit into AC power, an indirect matrix converter which combines a current-source converter circuit with a voltage-source inverter circuit, or the like is used (refer to Patent Document 2 below). The Japanese patent JP2003143890 discloses a power supply comprising a common mode filter and normal mode filter connected in series between an AC supply and an input rectifier, and a control power supply connected to a branch point in the line which connects the normal mode filter and the input rectifier.

With the respective power converter circuits (hereinafter, also collectively referred to as a converter circuit) using a switching element, since waveform control is performed by switching the switching element at an arbitrary timing, while generation of a power supply harmonic current is suppressed, ripple noise is generated by the switching. When the ripple noise from the converter circuit is transmitted to a line leading to an AC power supply, a ripple component is superimposed on a voltage or a current of AC power that is supplied from the AC power supply. When a voltage waveform on which ripple noise is superimposed is inputted to an auxiliary circuit such as a control power supply circuit, problems arise such as failures occurring in operations of a control circuit, parts, and the like that are driven by power supplied from the control power supply circuit. In order to solve such problems, a method of effectively suppressing the ripple noise with a simple configuration is required. Furthermore, even in a case where a power converter circuit comprises a diode rectifier-type rectifier circuit which does not include a switching element, when an inverter is connected as a load of the rectifier circuit and, particularly, when a smoothing circuit is not provided or when a smoothing capability is low, ripple noise generated by the inverter is transmitted to a side of an AC power supply in a similar manner. In consideration thereof, noise imparted on the AC power supply by the power converter circuit is desirably reduced.

Patent Document 1: Japanese Patent Application Laid-open No. H7-198154
Patent Document 2: Japanese Patent Application Laid-open No. 2009-95149

### Summary of the Invention

An object of the present invention is to effectively enable suppression of noise generated by a converter circuit which performs power conversion and suppression of situations where the noise is inputted to an auxiliary circuit or the like with a simple configuration.

A power converter circuit according to the present invention includes: a converter circuit converting AC power inputted from an AC power supply into DC power or different AC power; a noise filter provided on a line which connects the AC power supply and the converter circuit; and an auxiliary circuit connected to the AC power supply by a line that branches from a line which connects the AC power supply and the noise filter. The noise filter is a normal mode filter which suppresses an influence of noise from the converter circuit on the auxiliary circuit.

### Brief Description of the Drawings

[Fig. 1] Fig. 1 is a diagram showing an outline of a motor drive controller according to a first embodiment of the present invention.
[Fig. 2] Fig. 2 is a diagram showing an outline of a motor drive controller according to a second embodiment of the present invention.
[Fig. 3] Fig. 3 is a block diagram showing a motor drive controller according to a third embodiment of the present invention.
[Fig. 4] Fig. 4 is a block diagram showing a motor drive controller according to a fourth embodiment of the present invention.
[Fig. 5] Fig. 5 is a diagram showing an outline of a motor drive controller according to another embodiment of the present invention.
[Fig. 6] Fig. 6 is a diagram showing an outline of a motor drive controller according to yet another embodiment of the present invention.
[Fig. 7] Fig. 7 is a diagram showing an outline of a motor drive controller according to a reference example.
[Fig. 8] Fig. 8 is a diagram showing a schematic configuration of a noise filter NF 1.
[Fig. 9] Fig. 9 is a diagram showing an equation used to set a filter constant.
[Fig. 10] Fig. 10 is a graph showing examples of frequency characteristics of the noise filter NF1.

### Detailed Description of the Preferred Embodiments of the Invention

Power converter circuits and air conditioners according to embodiments of the present invention will be described below with reference to the drawings.

### <First embodiment>

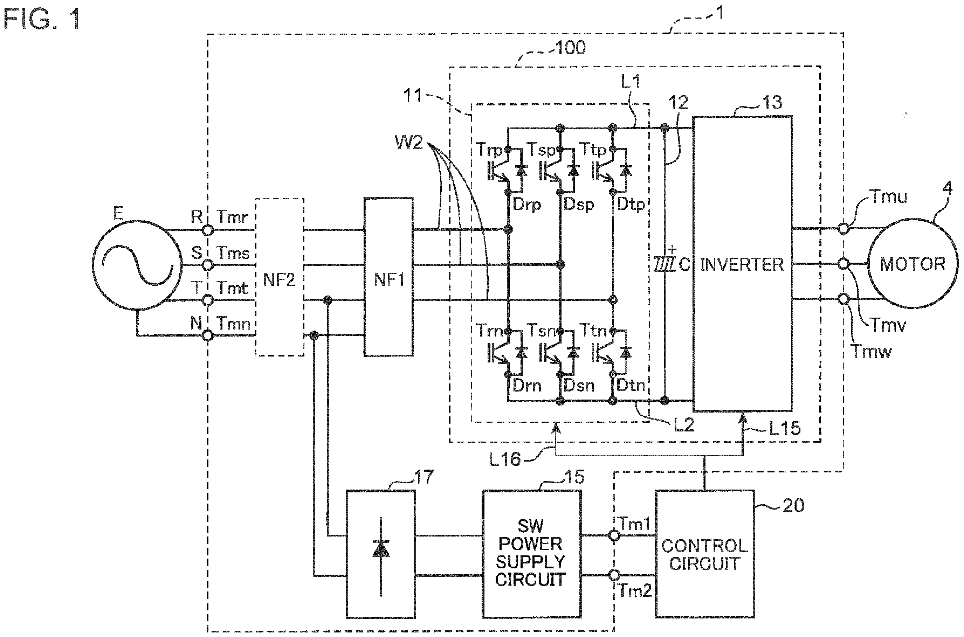

Fig. 1 is a schematic diagram showing a motor drive controller 1 as a first embodiment of a power converter circuit according to the present invention.

The motor drive controller (motor driving apparatus) 1 is, for example, provided in an air conditioner comprising a compressor and controls driving of a motor of the compressor or the like. Hereinafter, while a case where the motor drive controller 1 is applied to an air conditioner will be described as an example, applications of the power converter circuit according to the present invention are not limited to a motor drive controller, and applications of the power converter circuit and the motor drive controller according to the present invention are not limited to an air conditioner.

The power converter circuit 1 comprises input lines Tmr, Tms, Tmt, Tmn, an inverter 100, a rectifier circuit 17, a switching power supply circuit 15, and a noise filter NF1.

The input lines Tmr, Tms, Tmt, Tmn are connected to an AC power supply E. The AC power supply E is a multi-phase AC power supply. The AC power supply E is, for example, a three-phase four-wire AC power supply and supplies a three-phase AC current to the input lines Tmr, Tms, Tmt, Tmn. The input lines Tmr, Tms, Tmt, Tmn are connected to the AC power supply E via input terminals R, S, T, N which are connected to the AC power supply E. Connection of the input lines Tmr, Tms, Tmt, Tmn to the input terminals R, S, T, N enables AC power from the AC power supply E to be inputted the motor drive controller 1. The input lines Tmr, Tms, Tmt, Tmn represent lines from the input terminals R, S, T, N to an active converter circuit (an example of a converter circuit) 11 of the inverter 100. Hereinafter, with the input lines Tmr, Tms, Tmt among the input lines Tmr, Tms, Tmt, Tmn, wiring portions from the noise filter NF1 to the active converter circuit 11 may sometimes be referred to as lines W2 for ease of description.

The inverter 100 constitutes a power supply circuit which supplies drive power to a motor 4. The inverter 100 includes the active converter circuit 11, a voltage-source inverter circuit 13, a smoothing circuit 12, and DC power lines L1, L2 as output lines.

The active converter circuit 11 includes a plurality of switching elements. Due to respective switching operations of the plurality of switching elements, the active converter circuit 11 converts three-phase AC power inputted from the AC power supply E via the noise filter NF1 into DC power and supplies the converted DC power to the DC power lines L1, L2. Moreover, the DC power line L1 is a positive-side DC power line and the DC power line L2 is a negative-side DC power line to which a lower potential than the DC power line L1 is applied. The DC power converted by the active converter circuit 11 is inputted to the voltage-source inverter circuit 13 via the smoothing circuit 12.

More specifically, the active converter circuit 11 comprises transistors Trp, Trn, Tsp, Tsn, Ttp, Ttn and diodes Drp, Drn, Dsp, Dsn, Dtp, Dtn.

Respective collectors of the transistors Trp, Tsp, Ttp and respective cathodes of the diodes Dip, Dsp, Dtp are connected to the DC power line L1. Respective emitters of the transistors Trn, Tsn, Ttn and respective anodes of the diodes Drn, Dsn, Dtn are connected to the DC power line L2.

An emitter of the transistor Trp, a collector of the transistor Trn, an anode of the diode Drp, and a cathode of the diode Drn are connected by the input line Tmr to the AC power supply E via the noise filter NF1. In a similar manner, an emitter of the transistor Tsp, a collector of the transistor Tsn, an anode of the diode Dsp, and a cathode of the diode Dsn are connected by the input line Tms to the AC power supply E via the noise filter NF1. An emitter of the transistor Ttp, a collector of the transistor Ttn, an anode of the diode Dtp, and a cathode of the diode Dtn are connected by the input line Tmt to the AC power supply E via the noise filter NF1.

A capacitor C is connected between the DC power lines L1, L2 and is an element constituting the smoothing circuit 12 which smoothes output from the active converter circuit 11.

The voltage-source inverter circuit 13 comprises, for example, a switching element that is an Insulated Gate Bipolar Transistor (IGBT), a diode, and the like. The voltage-source inverter circuit 13 concerts DC power converted by the active converter circuit 11 and outputted from the capacitor C into AC power having an arbitrary frequency or voltage. The voltage-source inverter circuit 13 outputs the converted AC power to the motor 4.

The motor 4 is, for example, a three-phase AC motor. The motor 4 is driven by the AC power that is generated and outputted by the voltage-source inverter circuit 13 as described above.

Moreover, the voltage-source inverter circuit 13 of the inverter 100 is connected to the motor 4 via output terminals Tmu, Tmv, Tmw.

A control circuit 20 controls overall operations of the air conditioner by controlling driving of the motor 4 of the compressor and a fan motor, degrees of opening of a plurality of electric-operated valves included in the air conditioner, and the like. The control circuit 20 performs drive control of the active converter circuit 11 and the voltage-source inverter circuit 13 in order to perform drive control of the motor 4 of the compressor. The control circuit 20 is driven by power from the switching power supply circuit 15. Moreover, while the control circuit 20 is not a component of the motor drive controller 1 in the first embodiment, the control circuit 20 may alternatively be a component of the motor drive controller 1.

The control circuit 20 controls selection operations of the respective transistors included in the active converter circuit 11. For example, the control circuit 20 detects AC voltage in two predetermined phases (for example, the input lines Tmr, Tms) of the AC power supply E and generates a synchronizing signal, and outputs a switching signal to the respective transistors included in the active converter circuit 11 in synchronization with the generated synchronizing signal. Accordingly, the active converter circuit 11 converts three-phase AC voltage from the AC power supply E into DC voltage. In other words, the control circuit 20 outputs a switching signal to the active converter circuit 11 and controls switching of the transistors Trp, Trn, Tsp, Tsn, Ttp, Ttn. The active converter circuit 11 switches the transistors Trp, Trn, Tsp, Tsn, Ttp, Ttn according to switching signals supplied to respective bases of the transistors Trp, Trn, Tsp, Tsn, Ttp, Ttn from the control circuit 20 via a signal line L16. Accordingly, the active converter circuit 11 converts three-phase AC voltage from the AC power supply E which is inputted via the noise filter NF1 into DC voltage.

In addition, the control circuit 20 outputs a drive signal that is a PWM (Pulse Width Modulation) signal to the inverter circuit 13 and controls the inverter circuit 13 so that a drive frequency or a drive voltage of the motor 4 assumes an arbitrary value. In other words, the voltage-source inverter circuit 13 performs conversion from the DC voltage to square wave-shaped AC voltage by switching the IGBTs on or off in response to the drive signal that is a PWM signal inputted to the inverter circuit 13 from the control circuit 20 via a signal line L15. For example, due to the switching in accordance with the drive signal from the control circuit 20, a potential difference between the DC power lines L1, L2 is converted into AC voltage. Moreover, while a drive circuit for operating transistors or IGBTs is sometimes separately provided in an active converter circuit or a voltage-source inverter circuit, since such a configuration is not essential to the present invention, a description will be herein given on a case where a drive circuit is not separately provided.

The rectifier circuit 17 rectifies and converts AC voltage from the AC power supply E into DC voltage and outputs the converted DC voltage to the switching power supply circuit 15.

The switching power supply circuit (an example of an auxiliary circuit) 15 is a power supply circuit which supplies power to the control circuit 20 that is a light electric load due to the DC voltage converted by the rectifier circuit 17.

As described above, by being connected to the input terminals R, S, T, N connected to the AC power supply E, the input lines Tmr, Tms, Tmt, Tmn input AC power from the AC power supply E to the motor drive controller 1. The noise filter NF1 is provided on the input lines Tmr, Tms, Tmt, Tmn which connect the input terminals R, S, T, N and the inverter 100. In other words, the three-phase AC power (R phase, S phase, T phase) that is supplied from the three-phase four-wire AC power supply E having a neutral point N is inputted to the noise filter NF1 by the input lines Tmr, Tms, Tmt, Tmn and then inputted to the active converter circuit 11 via the noise filter NF1.

The noise filter NF1 is, for example, an LC integration-type noise filter including a reactor, a capacitor, and the like. The noise filter NF1 is a normal mode filter which eliminates noise (such as high-frequency noise or a ripple noise and, in particular, a ripple noise; hereinafter, "noise" is used in the same meaning) included in AC voltage that is supplied from the AC power supply E and which outputs the AC voltage to the active converter circuit 11.

When a ripple noise or the like is generated by switching or the like of the transistors Trp, Trn, Tsp, Tsn, Ttp, Ttn in the active converter circuit 11 of the inverter 100, the ripple noise or the like causes a noise (in other words, normal mode noise) in a voltage waveform of the AC voltage on the lines W2. However, such generated noise is eliminated by the noise filter NF1 and the AC voltage returns to the AC power supply E as a neat sinusoidal wave. In other words, the noise filter NF1 also functions as a carrier filter which eliminates noise in a switching frequency (carrier frequency) component.

In addition, the rectifier circuit 17 and the switching power supply circuit 15 are connected to the AC power supply E in a branched state from a point between the AC power supply E and the noise filter NF1 on the input lines Tmt, Tmn which connect the AC power supply E and the noise filter NF1. In other words, by interposing the noise filter NF1 on lines between the inverter 100 and the switching power supply circuit 15, the noise filter NF1 suppresses an influence of noise from the active converter circuit 11 of the inverter 100 on the switching power supply circuit 15.

Furthermore, the noise filter NF1 is provided at a point where respective lines W2 which connect the noise filter NF1 and the active converter circuit 11 of the inverter 100 are shorter than wiring portions of the input lines Tmr, Tms, Tmt, Tmn which connect from the input terminals R, S, T, N to the noise filter NF1. Accordingly, since a distance over which noise generated by switching or the like of the transistors Trp, Trn, Tsp, Tsn, Ttp, Ttn in the active converter circuit 11 of the inverter 100 propagates along the lines between the inverter 100 and the noise filter NF1 is reduced, an influence of a stray capacitance of the lines W2 which connects the noise filter NF1 and the inverter 100 is also reduced.

### <Second embodiment>

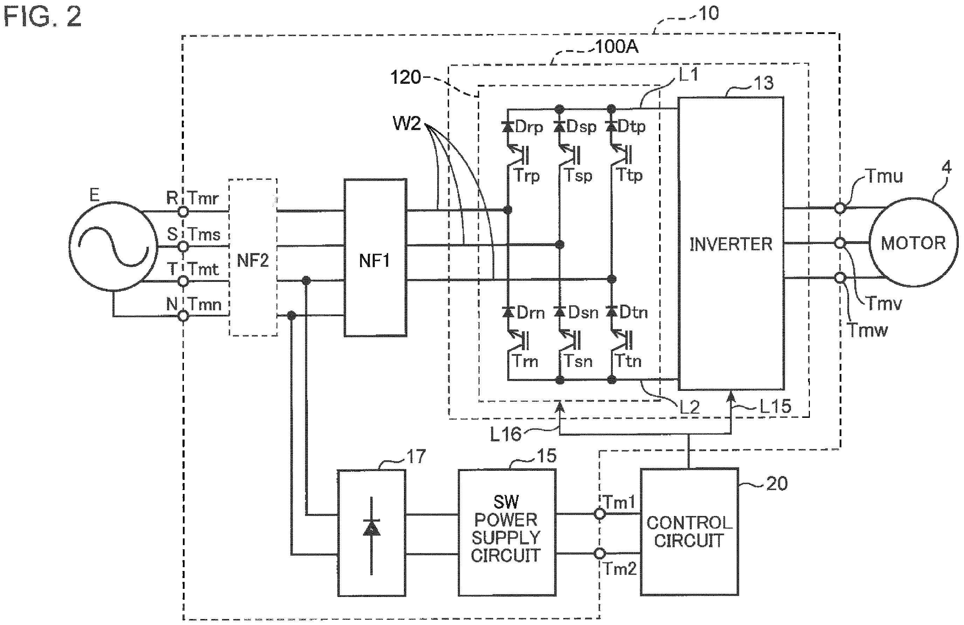

Fig. 2 is a schematic diagram showing a motor drive controller 10 as a second embodiment of the power converter circuit according to the present invention. Hereinafter, only a configuration of the motor drive controller 10 according to the second embodiment which differs from that of the motor drive controller 1 according to the first embodiment will be described. A configuration of the motor drive controller 10 which is not particularly described is similar to that of the motor drive controller 1.

In a similar manner to the motor drive controller 1 according to the first embodiment, the motor drive controller 10 according to the second embodiment comprises input lines Tmr, Tms, Tmt, Tmn, an indirect matrix converter (an example of a converter circuit) 100A, a rectifier circuit 17, a switching power supply circuit 15, and a noise filter NF1. The indirect matrix converter 100A comprises a current-source converter 120 in place of the active converter circuit 11 according to the first embodiment. Switching operations of the current-source converter 120 are controlled by a control circuit 20. A voltage-source inverter circuit 13 included in the indirect matrix converter 100A is similar to that of the first embodiment.

The indirect matrix converter 100A includes the voltage-source inverter circuit 13 connected to the current-source converter 120 via a DC link that does not involve a smoothing circuit. In this embodiment, the indirect matrix converter 120 comprises transistors Trp, Trn, Tsp, Tsn, Ttp, Ttn and diodes Drp, Drn, Dsp, Dsn, Dtp, Dtn.

An emitter of the transistor Trp is connected to an anode of the diode Drp, and a cathode of the diode Drp is connected to the DC power line L1. An emitter of the transistor Tsp is connected to an anode of the diode Dsp, and a cathode of the diode Dsp is connected to the DC power line L1. An emitter of the transistor Ttp is connected to an anode of the diode Dtp, and a cathode of the diode Dtp is connected to the DC power line L1.

An anode of the diode Drn is connected to an emitter of the transistor Trn, and a collector of the transistor Trn is connected to the DC power line L2. An anode of the diode Dsn is connected to an emitter of the transistor Tsn, and a collector of the transistor Tsn is connected to the DC power line L2. An anode of the diode Dtn is connected to an emitter of the transistor Ttn, and a collector of the transistor Ttn is connected to the DC power line L2.

A collector of the transistor Trp and a cathode of the diode Drn are connected by the input line Tmr to the AC power supply E via the noise filter NF1. In a similar manner, a collector of the transistor Tsp and a cathode of the diode Dsn are connected by the input line Tms to the AC power supply E via the noise filter NF 1. A collector of the transistor Ttp and a cathode of the diode Dtn are connected by the input line Tmt to the AC power supply E via the noise filter NF1.

Moreover, while Fig. 2 shows an example in which an anode of a diode is connected to an emitter of an IGBT in each element, a configuration in which a cathode of a diode is connected to a collector of an IGBT can also be adopted.

In addition, reverse blocking IGBTs (RB-IGBTs) can be used in place of the respective elements described above which are constituted by a diode and an IGBT.

As described above, even when the indirect matrix converter 100A is used, the indirect matrix converter 120 generates noise (in particular, high-frequency noise and ripple noise) due to switching of the transistors Trp, Trn, Tsp, Tsn, Ttp, Ttn performed during power conversion, the voltage-source inverter circuit 13, and the like. The generated noise propagates to the lines W2. In the second embodiment, by interposing the noise filter NF1 on lines between the indirect matrix converter 100A and the switching power supply circuit 15, the noise filter NF1 suppresses an influence of noise from the indirect matrix converter 100A on the switching power supply circuit 15 in a similar manner to the first embodiment.

### <Third embodiment>

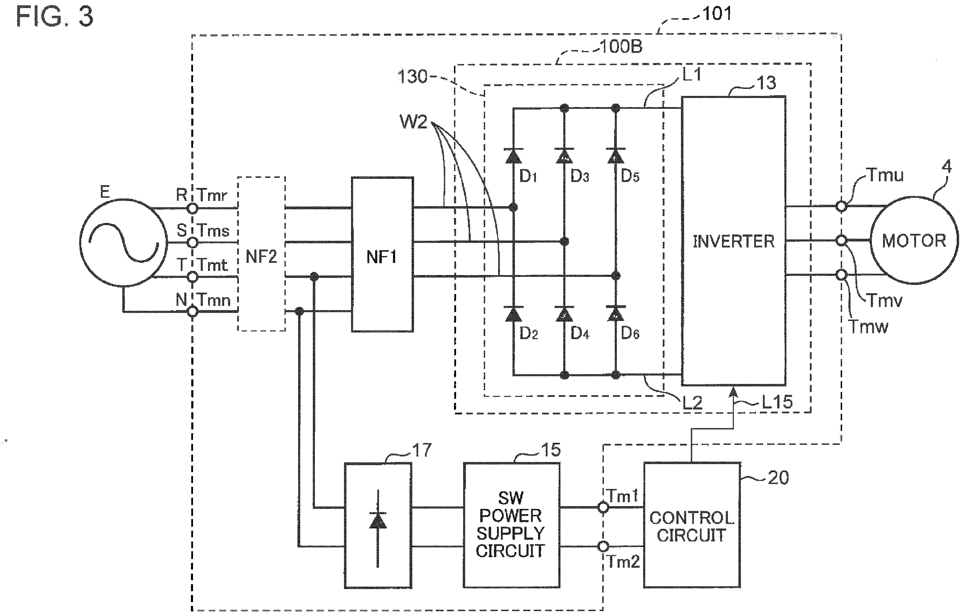

Fig. 3 is a schematic diagram showing a motor drive controller 1 as a third embodiment of a power converter circuit according to the present invention. Hereinafter, only a configuration of the motor drive controller 101 according to the third embodiment which differs from that of the motor drive controller 1 according to the first embodiment will be described. A configuration of the motor drive controller 101 which is not particularly described is similar to that of the motor drive controller 1.

In a similar manner to the motor drive controller 1 according to the first embodiment, the motor drive controller 101 according to the third embodiment comprises input lines Tmr, Tms, Tmt, Tmn, an inverter 100B, a rectifier circuit 17, a switching power supply circuit 15, and a noise filter NF1. The inverter 100B comprises a diode rectifier circuit 130 which converts AC power into DC power using a diode in place of the active converter circuit 11 according to the first embodiment. In this case, a control circuit 20 controls switching operations of an inverter circuit 13. The voltage-source inverter circuit 13 included in the inverter 100B is similar to that of the first embodiment.

In the third embodiment, the diode rectifier circuit 130 comprises diodes D1, D2, D3, D4, D5, D6. The diodes D1, D2 connected in series, the diodes D3, D4 connected in series, and the diodes D5, D6 connected in series are connected to power lines L1, L2. lines W2 are connected to a line between the diodes D1, D2, to a line between the diodes D3, D4, and to a line between the diodes D5, D6.

As described above, even with the motor drive controller 101 in which the diode rectifier circuit 130 is used in the inverter 100B, unless a smoothing circuit is specifically provided, there is a risk that ripple noise generated by switching of the inverter circuit 13 performed during power conversion or the like may propagate to the lines W2 via the diode rectifier circuit 130. In the motor drive controller 101, by arranging the noise filter NF1 that is a normal mode filter on lines between the AC power supply E and the converter circuit 130, ripple noise or the like which is generated by switching of the inverter circuit 13 or the like can be eliminated in a similar manner to the first embodiment. In addition, by interposing the noise filter NF1 on lines between the inverter 100B and the switching power supply circuit 15, the noise filter NF1 suppresses an influence of noise from the diode rectifier circuit 130 of the inverter 100B on the switching power supply circuit 15.

Moreover, while an example in which the converter 130 does not include the capacitor C as a smoothing circuit and in which the inverter circuit 13 converts DC power that has not passed through the capacitor C into AC power is described in the third embodiment shown in Fig. 3, this example is not restrictive. For example, the converter 130 may adopt a configuration which comprises a capacitor C whose capability is low enough that the capacitor C is incapable of functioning as a smoothing circuit that eliminates noise generated by the inverter and in which the inverter circuit 13 converts DC power having passed through the low-capability capacitor C into AC power.

### <Fourth embodiment>

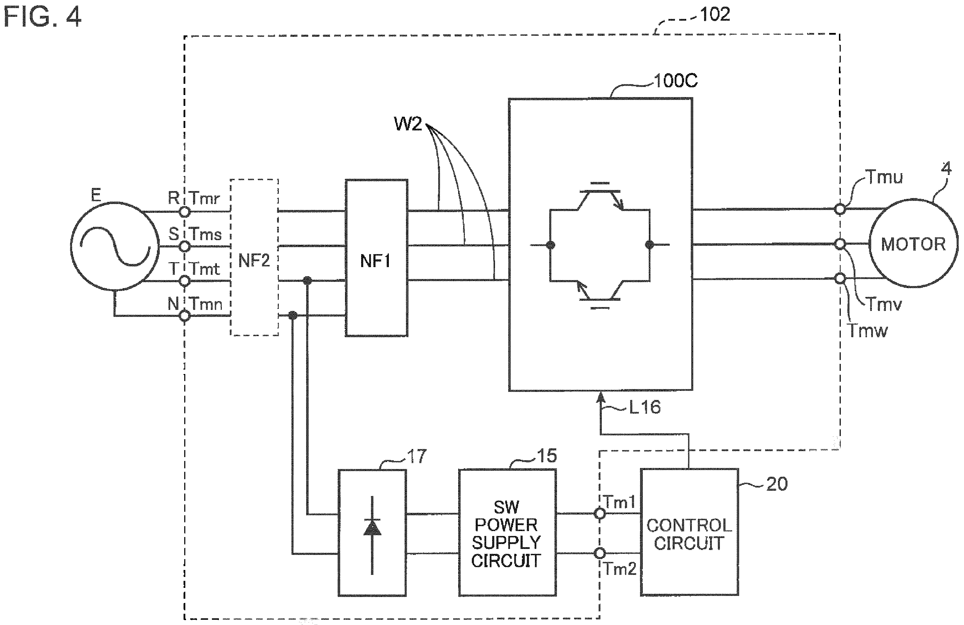

Fig. 4 is a schematic diagram showing a motor drive controller 1 as a fourth embodiment of a power converter circuit according to the present invention. Hereinafter, only a configuration of the motor drive controller 102 according to the fourth embodiment which differs from that of the motor drive controller 1 according to the first embodiment will be described. A configuration of the motor drive controller 102 which is not particularly described is similar to that of the motor drive controller 1.

In a similar manner to the motor drive controller 1 according to the first embodiment, the motor drive controller 102 according to the fourth embodiment comprises input lines Tmr, Tms, Tmt, Tmn, a matrix converter circuit (an example of a converter circuit) 100C, a rectifier circuit 17, a switching power supply circuit 15, and a noise filter NF1. The matrix converted circuit 100C converts AC power into different AC power (AC power in which at least one of voltage, current, and frequency differs). In this case, a control circuit 20 controls switching operations of the matrix converter circuit 100C via a signal line L16.

As described above, even when the matrix converter circuit 100C is used, the matrix converter circuit 100C generates ripple noise (normal mode noise) due to switching performed during power conversion or the like. The generated noise propagates to the lines W2. In the fourth embodiment, by arranging the noise filter NF1 that is a normal mode filter on lines between the AC power supply E and the matrix converter circuit 100C, ripple noise or the like which is generated by switching of the matrix converter circuit 100C or the like can be eliminated in a similar manner to the first embodiment. In addition, by interposing the noise filter NF1 on lines between the matrix converter circuit 100C and the switching power supply circuit 15, the noise filter NF1 suppresses an influence of noise from the matrix converter circuit 100C on the switching power supply circuit 15 in a similar manner to the first embodiment.

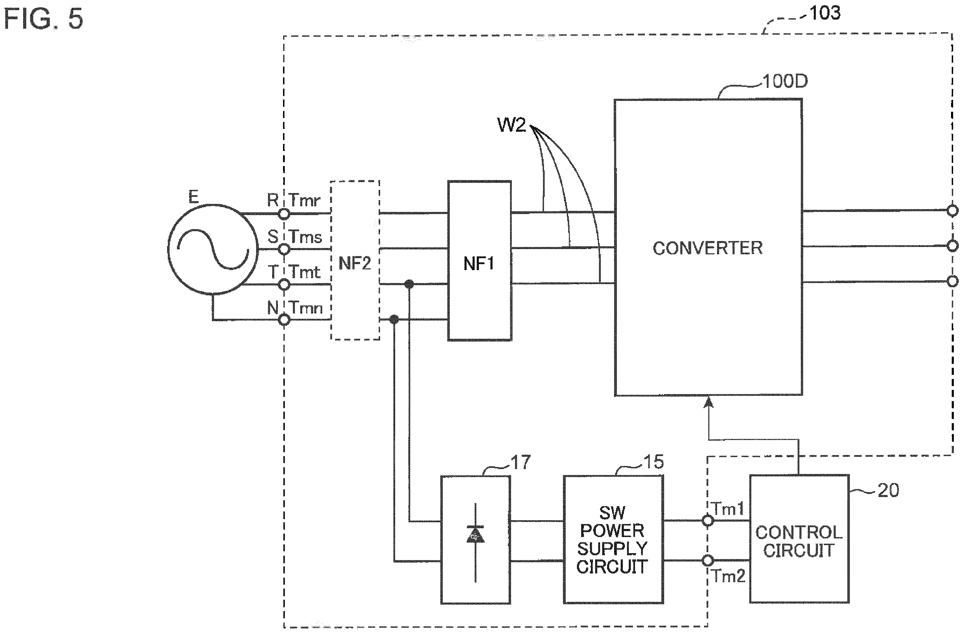

Moreover, the present invention is not limited to the configurations of the above embodiments and various modifications can be made thereto. For example, as shown in Fig. 5, when a converter circuit 100D which performs AC power-DC power conversion by a switching operation is provided, by interposing the noise filter NF1 on lines between the converter and the switching power supply circuit 15, the noise filter NF1 is able to suppress an influence of noise generated by a switching operation of the converter circuit 100D or the like on the switching power supply circuit 15. Furthermore, the present invention can also be applied to inverter/converter which perform AC power-DC power conversion, AC power-AC power conversion, DC power-DC power conversion, or DC power-AC power conversion. In addition, while a voltage-source inverter has been described as an example of an inverter circuit in the embodiments, a similar effect can be produced in the case of a current-source inverter.

Furthermore, while a case where the motor controller 1 as an embodiment of the power converter circuit according to the present invention is a compressor-driving power converter circuit and the switching power supply circuit 15 is an embodiment of the auxiliary circuit according to the present invention has been described as an example above, it is obvious that the present invention is not limited to this case. For example, (1) the motor controller 1 as an embodiment of the power converter circuit according to the present invention may be a compressor-driving power converter circuit and a circuit including a fan-driving circuit may be an embodiment of the auxiliary circuit according to the present invention, or (2) the motor controller 1 as an embodiment of the power converter circuit according to the present invention may be a compressor-driving power converter circuit and a circuit including an indoor unit-driving circuit may be an embodiment of the auxiliary circuit according to the present invention.

Moreover, with the first to fourth embodiments described above and the embodiment shown in Fig. 5, by further providing a common mode filter NF2 on the input lines Tmr, Tms, Tmt, Tmn which connect the AC power supply E and the noise filter NF 1, common mode noise between the motor drive controller 1 and ground can be further eliminated. For example, as depicted by dashed lines in Figs. 1 to 5, the common mode filter NF2 is located on the AC power supply E side than a branch point from the input lines Tmr, Tms, Tmt, Tmn to the switching power supply circuit 15.

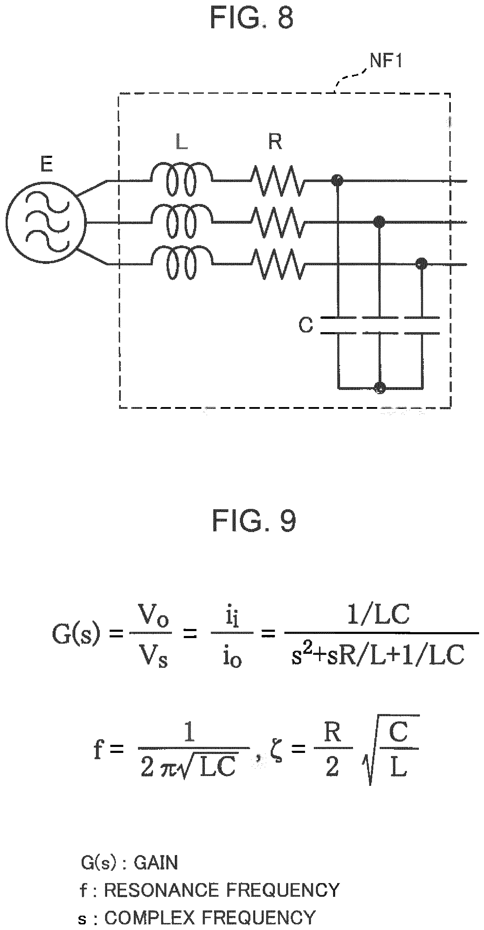

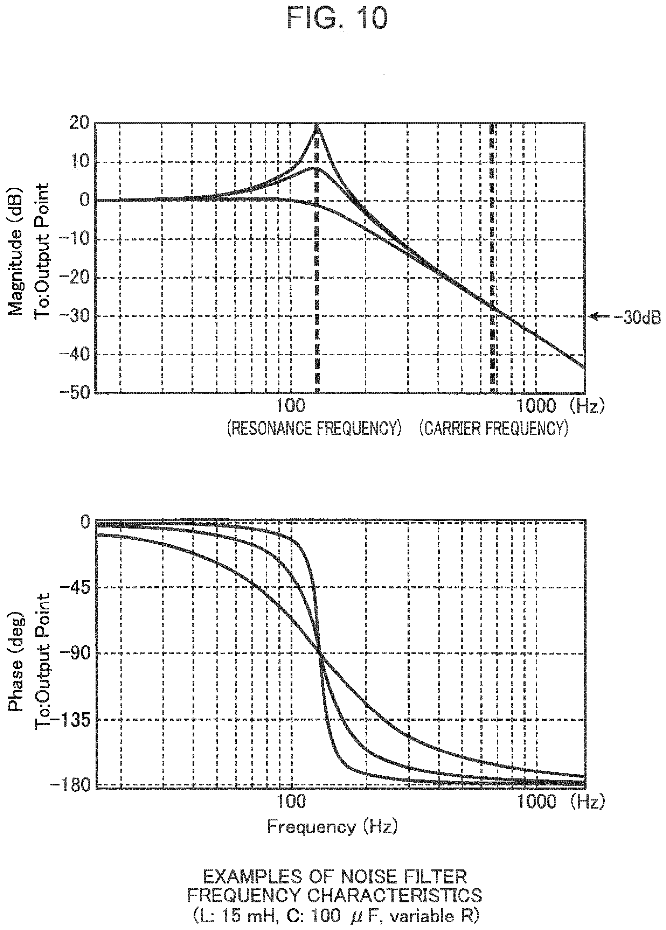

In this case, for example, the noise filter NF1 can adopt a configuration shown in Fig. 8. A filter constant of the noise filter NF1 is suitably varied in accordance with a frequency of a switching operation. The filter constant of the noise filter NF1 is suitably varied in accordance with a frequency of a switching operation of the respective converters, the converter circuits 11, 120, 100C, 100D, or the inverter circuit 13 (in the case of the inverter 100B shown in Fig. 3). In other words, based on an equation shown in Fig. 9, L and C are tuned in accordance with a carrier frequency of the respective converters, the converter circuits 11, 120, 100C, 100D, or the inverter circuit 13 which is a frequency that is desirably attenuated so that a gain of the carrier frequency is sufficiently reduced. For example, when the respective converters, the converter circuits 11, 120, 100C, 100D, or the inverter circuit 13 has a carrier frequency of 700 Hz, an inductance L of the noise filter NF1 is set to 15 mH and capacitance C is set to 100 µF (resonance frequency 130 Hz). In this case, a carrier frequency component can be attenuated by 30 dB by the noise filter NF1 (refer to the graph shown in Fig. 10).

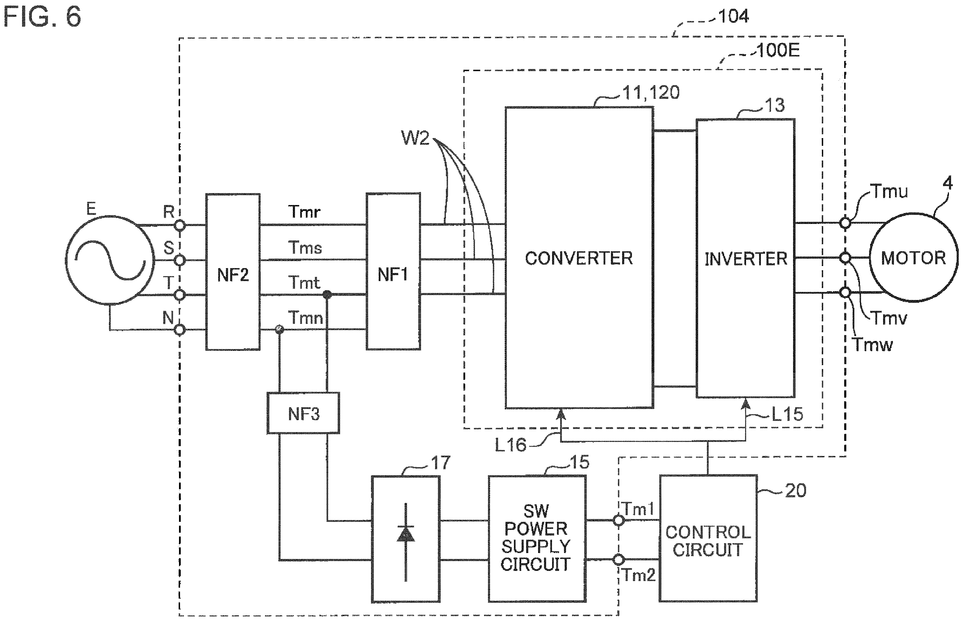

In addition, for example, as shown in Fig. 6, the noise filter NF1 may be interposed on lines between a power converter circuit 100E (including a converter circuit which is, but not limited to, an active converter circuit 11, a current-source converter 120, or the like) which performs power conversion due to a switching operation and the switching power supply circuit 15, and a noise filter NF3 may be provided in addition to the noise filter NF1 (normal mode filter) and a further noise filter NF2 (common mode filter).

In this embodiment, the noise filter NF2 is provided on input lines Tmr, Tms, Tmt, Tmn and is located on the AC power supply E side than points on the input lines Tmt, Tmn at which lines to the rectifier circuit 17 and the switching power supply circuit 15 branch.

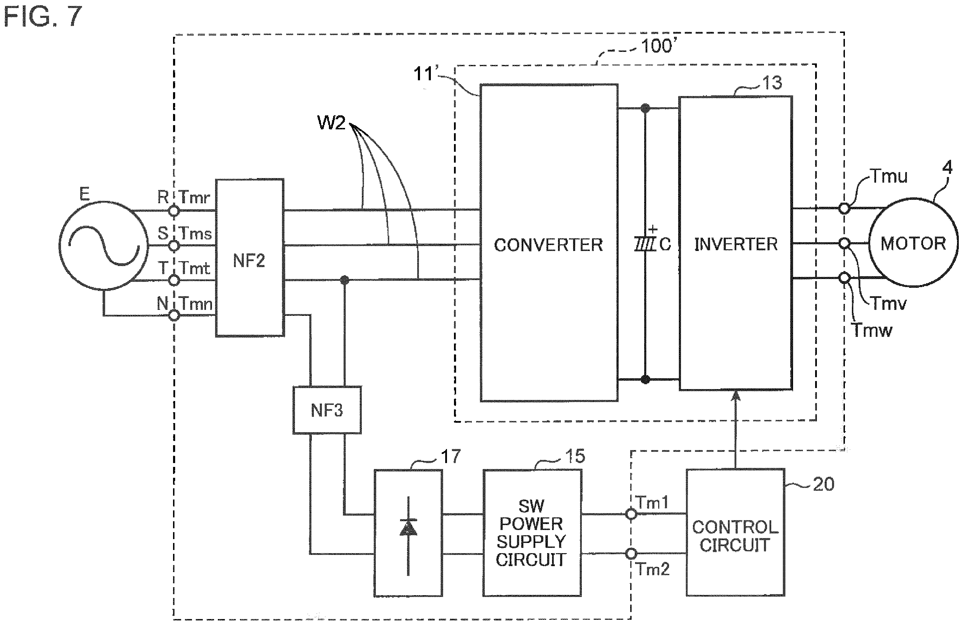

The noise filter NF3 is provided on the lines which branch from the input lines Tmt, Tmn toward the rectifier circuit 17 and the switching power supply circuit 15 at a position preceding the rectifier circuit 17. In this case, an influence of the noise from the converter circuit (the active converter circuit 11, the current-source converter 120, or the like) of the power converter circuit 100E on the rectifier circuit 17 and the switching power supply circuit 15 can be further reduced. In particular, by providing the noise filter NF1, a size of the noise filter NF3 can be reduced as compared to the noise filter NF3 of a motor drive controller according to a reference example (refer to Fig. 7 below) which does not comprise the noise filter NF1 and comprises only the noise filter NF2 and the noise filter NF3. Moreover, when adopting the configuration shown in Fig. 6, a similar effect can be produced by applying a converter circuit (for example, the matrix converter circuit 140 shown in Fig. 4) which performs AC power-DC power conversion and AC power-AC power conversion due to a switching operation instead of the power converter circuit 100E which comprises the above converter circuit and the inverter circuit 13 .

In addition, the AC power supply E in the motor drive controllers 1, 10, 101, 102, 103, 104 may be any of a single-phase AC power supply, a three-phase AC power supply, and a three-phase four-wire AC power supply. However, as described earlier, in the case of a three-phase four-wire power supply, by connecting power lines of the switching power supply circuit 15 to one wire of the three-phase four-wire as the AC power supply E and to a neutral point, an low-voltage element can be used in the switching power supply circuit 15.

Fig. 7 is a diagram showing an outline of a motor drive controller according to a reference example. In this case, a presence or absence of a capacitor capable of smoothing DC power ripples between a converter circuit 11' and an inverter circuit 13 need not be considered.

In this case, the rectifier circuit 17 and the switching power supply circuit 15 are connected to input lines Tmt, Tmn which connect the AC power supply E and the converter circuit (an example of a converter circuit) 11' of an inverter 100'. The rectifier circuit 17 and the switching power supply circuit 15 are branched from a point between a noise filter NF2 (which may also be a normal mode filter) that is a common mode filter that cancels noise generated by the converter circuit 11' when the inverter 100' is an SW element and the converter circuit 11' of the inverter 100', and are connected to the AC power supply E. In addition, a noise filter NF3 may be provided on lines which branch from the input lines Tmt, Tmn toward the rectifier circuit 17 and the switching power supply circuit 15 at a position preceding the rectifier circuit 17. In this case, the noise filter NF3 must be capable of eliminating an influence of the noise from the power converter circuit 100' on the rectifier circuit 17 and the switching power supply circuit 15.

Furthermore, the noise filter NF2 is provided at a point where lines W2 which connect the noise filter NF2 and the converter circuit 11' of the inverter 100' are longer than wiring portions of the input lines Tmr, Tms, Tmt, Tmn which connect from the input terminals R, S, T, N to the noise filter NF2. As a result, a wiring distance between the converter circuit 11' and the noise filter NF2 becomes longer and an influence of propagation of noise generated by the inverter 100' is increased by a stray capacitance between the lines W2 which connect the noise filter NF2 and the converter circuit 11' to each other and signal lines.

In contrast, with the motor drive controllers 1, 10, 101, 102, 103, 104 according to embodiments of the present invention, a malfunction occurring in the motor drive controller according to the reference example may be reduced as described above.

Moreover, the specific embodiments described above primarily include an invention configured as described below.
(1) The power converter circuit comprises; a converter circuit converting AC power inputted from an AC power supply into DC power or different AC power; a noise filter provided on a line which connects the AC power supply and the converter circuit; and an auxiliary circuit connected to the AC power supply by a line that branches from a line which connects the AC power supply and the noise filter, wherein the noise filter is a normal mode filter which suppresses an influence of noise from the converter circuit on the auxiliary circuit.
   In this mode, by providing the noise filter on the line which connects an AC power supply and a converter circuit, ripple noise which is generated in the converter circuit or generated in an inverter circuit or the like connected to the converter circuit and transmitted to line that leads from the converter circuit to the AC power supply is suppressed. In addition, by branching the line that connects the AC power supply and the noise filter and connecting an auxiliary circuit to the AC power supply with the branched line, the noise filter can be interposed on a line that connects the converter circuit and a power supply circuit. Accordingly, an influence of the ripple noise from the converter circuit on the auxiliary circuit is suppressed.
   According to the noise filter arranged in this manner, the influence of the ripple noise on the auxiliary circuit can be reduced without separately providing a noise filter dedicated to the auxiliary circuit in order to suppress noise from the converter circuit. As a result, in this mode, suppression of the ripple noise generated by the converter circuit and suppression of situations where the ripple noise is inputted to an auxiliary circuit such as a power supply circuit can be effectively performed with a simple configuration.
(2) In the power converter circuit, when the converter circuit is a converter circuit which converts AC power inputted from the AC power supply into DC power by switching a semiconductor switch, the power converter circuit may further comprise an inverter circuit which converts DC power converted by the converter circuit into AC power.
(3) In the power converter circuit, the converter circuit is, for example, a converter circuit which converts AC power inputted from the AC power supply into DC power by switching a semiconductor switch.
(4) In the power converted circuit, the converter circuit is, for example, a direct power converter circuit which converts AC power inputted from the AC power supply into AC power in which at least one of voltage, current, and frequency differs by switching a semiconductor switch.
   According to the modes described in (2) to (4), suppression of ripple noise generated by switching of a semiconductor switch which is performed by a converter circuit or ripple noise generated by switching of a semiconductor switch which is performed by a direct power converter circuit and suppression of situations where the ripple noise is inputted to an auxiliary circuit can be effectively performed with a simple configuration.
(5) In the power converter circuit, the converter circuit may be a diode rectifier circuit which converts AC power inputted from the AC power supply into DC power. In this case, favorably, the power converter circuit further comprises an inverter circuit that converts DC power, which is converted by the diode rectifier circuit, and which has not passed through a capacitor capable of smoothing DC power ripples or which has passed through a capacitor with low smoothing capabilities, into AC power.
   According to this mode, suppression of ripple noise generated by switching of a semiconductor switch which is performed by the inverter circuit and suppression of situations where the ripple noise is inputted to an auxiliary circuit such as a power supply circuit can be effectively performed with a simple configuration.
(6) In the power converter circuit, the auxiliary circuit may be a control power supply circuit.
(7) In the power converter circuit, favorably, a line which connects the noise filter and the converter circuit is shorter than a line which connects from an input terminal to the noise filter, the input terminal being connected to the AC power supply for inputting AC power from the AC power supply into the power converter circuit.
   When a line that carries voltage or current on which ripple noise generated by the converter circuit is superimposed or, in other words, a line that connects the noise filter and the converter circuit is long, the line acts as an antenna which propagates noise and may have an adverse effect such as a noise-induced malfunction on other circuit portions such as a control circuit or a communication circuit.
   In the mode described in (7), since the line which connects the noise filter and the converter circuit is shorter than the line which connects from the input terminal for inputting AC power from the AC power supply into the power converter circuit to the noise filter, a distance over which ripple noise generated by the converter circuit propagates along the line between the converter circuit and the noise filter is reduced. Accordingly, an adverse effect such as a noise-induced malfunction on other circuit portions such as a control circuit or a communication circuit can be suppressed. In addition, an influence due to stray capacitance of the line which connects the noise filter and the converter circuit can also be reduced.
(8) The air conditioner comprises the power converter circuit according to any one of (1) to (7).
(9) In the air conditioner, the power converter circuit may be a compressor-driving power converter circuit and the auxiliary circuit may include a fan-driving circuit.
(10) In the air conditioner, the power converter circuit may be a compressor-driving power converter circuit and the auxiliary circuit may include an indoor unit-driving circuit.

According to the modes described in (9) and (10), suppression of ripple noise generated by a converter circuit included in the above circuit as a power converter circuit and suppression of situations where the ripple noise is inputted to a fan-driving circuit or an indoor unit-driving circuit included in the auxiliary circuit can be effectively performed with a simple configuration.

### Explanation of Reference Numerals

- 1, 10, 101, 102, 103, 104: motor drive controller (power converter circuit)

- 4: motor
- 100, 100B, 100C, 100D: inverter
- 100A: indirect matrix converter
- 100C: matrix converter
- 100D: converter circuit
- 100E: power converter circuit
- 11: active converter circuit
- 130: diode rectifier circuit
- 12: smoothing circuit
- 13: inverter circuit
- 15: switching power supply circuit
- 20: control circuit
- NF1: noise filter
- E: AC power supply
- R, S, T, N: input terminal
- LC: rectifier circuit
- Tmr, Tms, Tmt, Tmn: input line
- W2: line

## Claims

1. A power converter circuit comprising:
a converter circuit converting AC power inputted from an AC power supply (E) into DC power or different AC power;
a noise filter (NF1) provided on a line which connects the AC power supply and the converter circuit;
a common mode filter (NF2) provided on the line which connects the AC power supply (E) and the noise filter (NF1), wherein the noise filter (NF1) is a normal mode filter which includes a reactor and a capacitor, and suppresses an influence of normal mode noise from the converter circuit on the auxiliary circuit (15),
a branch point in the line which connects the common mode filter (NF2) and the noise filter (NF1), and an auxiliary circuit (15) connected to said brach point.

2. The power converter circuit according to claim 1, wherein the converter circuit converts AC power inputted from the AC power supply (E) into DC power by switching a semiconductor switch,
the power converter circuit further comprising an inverter circuit (13) which converts DC power converted by the converter circuit into AC power.

3. The power converter circuit according to claim 1, wherein the converter circuit is a converter circuit which converts AC power inputted from the AC power supply (E) into DC power by switching a semiconductor switch.

4. The power converter circuit according to claim 1, wherein the converter circuit is a direct power converter circuit which converts AC power inputted from the AC power supply (E) into AC power in which at least one of voltage, current, and frequency differs by switching a semiconductor switch.

5. The power converter circuit according to claim 1, wherein the converter circuit is a diode rectifier circuit (130) which converts AC power inputted from the AC power supply (E) into DC power,
the power converter circuit further comprising an inverter circuit (13) that converts DC power, which is converted by the diode rectifier circuit (130), and which has not passed through a capacitor capable of smoothing DC power ripples or which has passed through a capacitor with low smoothing capabilities, into AC power.

6. The power converter circuit according to any one of claims 1 to 5, wherein the auxiliary circuit (15) is a control power supply circuit.

7. The power converter circuit according to any one of claims 1 to 6, wherein a line which connects the noise filter (NF1) and the converter circuit is shorter than a line which connects from an input terminal to the noise filter (NF1), the input terminal being connected to the AC power supply (E) for inputting AC power from the AC power supply (E) into the power converter circuit.

8. An air conditioner comprising the power converter circuit according to claims 1 to 7.

9. The air conditioner according to claim 8, wherein the power converter circuit is a compressor-driving power converter circuit and the auxiliary circuit (15) includes a fan-driving circuit.

10. The air conditioner according to claim 8 or 9, wherein the power converter circuit is a compressor-driving power converter circuit and the auxiliary circuit (15) includes an indoor unit-driving circuit.

## Patentansprüche

1. Stromrichterschaltung, umfassend:
eine Wandlerschaltung, die eine von einer Wechselstromversorgung (E) eingegebene Wechselspannung in eine Gleichspannung oder in eine andere Wechselspannung umwandelt;
ein Rauschfilter (NF1), das auf einer Leitung vorgesehen ist, die die Wechselstromversorgung und die Wandlerschaltung verbindet;
ein Gleichtaktfilter (NF2), das auf der Leitung vorgesehen ist, die die Gleichstromversorgung (E) und das Rauschfilter (NF1) verbindet, wobei das Rauschfilter (NF1) ein Normalmodusfilter ist, das eine Drosselspule und einen Kondensator enthält, und einen Einfluss von Normalmodusrauschen von der Wandlerschaltung auf die Hilfsschatung (15) unterdrückt,
einen Verzweigungspunkt in der Leitung, die das Gleichtaktfilter (NF2) und das Rauschfilter (NF1) verbindet, und
eine Hilfsschaltung (15), die an den Verzweigungspunkt angeschlossen ist.

2. Stromrichterschaltung nach Anspruch 1, **dadurch gekennzeichnet, dass** die Wandlerschaltung die von der Wechselstromversorgung (E) eingegebene Wechselspannung durch Schalten eines Halbleiterschalters in Gleichspannung umwandelt, wobei die Stromrichterschaltung ferner eine Inverterschaltung (13) aufweist, die die durch die Wandlerschaltung umgewandelte Gleichspannung in Wechselspannung umwandelt.

3. Stromrichterschaltung nach Anspruch 1, **dadurch gekennzeichnet, dass** die Wandlerschaltung eine Wandlerschaltung ist, die die von der Wechselstromversorgung (E) eingegebene Wechselspannung durch Schalten eines Halbleiterschalters in Gleichspannung umwandelt.

4. Stromrichterschaltung nach Anspruch 1, **dadurch gekennzeichnet, dass** die Wandlerschaltung eine Gleichstromwandlerschaltung ist, die die von der Wechselstromversorgung (E) eingegebene Wechselspannung durch Schalten eines Halbleiterschalters in eine Wechselspannung umwandelt, die sich in zumindest einem von Spannung, Strom und Frequenz unterscheidet.

5. Stromrichterschaltung nach Anspruch 1, **dadurch gekennzeichnet, dass** die Wandlerschaltung eine Diodengleichrichterschaltung (130) ist, die eine von der Wechselstromversorgung (E) eingegebene Wechselspannung in Gleichspannung umwandelt, wobei die Stromrichterschaltung ferner eine Inverterschaltung (13) aufweist, die Gleichstrom, der durch die Diodengleichrichterschaltung (130) umgewandelt wird und der nicht durch einen Kondensator gegangen ist, der in der Lage ist, Gleichstromwellen zu glätten, oder der durch einen Kondensator mit einer geringen Glättungsfähigkeit gegangen ist, in Wechselstrom umwandelt.

6. Stromrichterschaltung nach einem der Ansprüche 1 bis 5, **dadurch gekennzeichnet, dass** die Hilfsschaltung (15) eine Steuerspannungsversorgungsschaltung ist.

7. Stromrichterschaltung nach einem der Ansprüche 1 bis 6, **dadurch gekennzeichnet, dass** eine Leitung, die das Rauschfilter (NF1) und die Wandlerschaltung verbindet, kürzer als eine Leitung ist, die eine Verbindung von einem Eingangsanschluss zu dem Rauschfilter (NF1) bildet, wobei der Eingangsanschluss mit der Wechselstromversorgung (E) verbunden ist, um Wechselstrom von der Wechselstromversorgung (E) in die Stromrichterschaltung einzugeben.

8. Klimagerät, das eine Stromrichterschaltung nach einem der Ansprüche 1 bis 7 umfasst.

9. Klimagerät nach Anspruch 8, **dadurch gekennzeichnet, dass** die Stromrichterschaltung eine Stromrichterschaltung für den Antrieb des Kompressors ist und die Hilfsschaltung (15) eine Lüfterantriebsschaltung umfasst.

10. Klimagerät nach Anspruch 8 oder 9, **dadurch gekennzeichnet, dass** die Stromrichterschaltung eine Stromrichterschaltung für den Antrieb des Kompressors ist und die Hilfsschaltung (15) eine Inneneinheit-Ansteuerschaltung umfasst.

## Revendications

1. Circuit convertisseur de puissance comprenant :
un circuit convertisseur convertissant une énergie en courant alternatif fournie par une alimentation en courant alternatif (E) en énergie en courant continu ou en énergie en courant alternatif différente ;
un filtre antiparasites (NF1) prévu sur une ligne qui connecte l'alimentation en courant alternatif et le circuit convertisseur,
un filtre en mode commun (NF2) prévu sur la ligne qui connecte l'alimentation en courant alternatif (E) et le filtre antiparasites (NF1), le filtre antiparasites (NF1) étant un filtre en mode série qui comprend une bobine de réactance et un condensateur, et qui supprime une influence des parasites en mode série provenant du circuit convertisseur sur le circuit auxiliaire (15),
un point de dérivation dans la ligne qui connecte le filtre en mode commun (NF2) et le filtre antiparasites (NF1), et
un circuit auxiliaire (15) connecté audit point de dérivation.

2. Circuit convertisseur de puissance selon la revendication 1, ce circuit convertisseur convertissant une énergie en courant alternatif fournie par l'alimentation en courant alternatif (E) en énergie en courant continu en actionnant un commutateur à semi-conducteur,
ce circuit convertisseur de puissance comprenant en outre un circuit onduleur (13) qui convertit l'énergie en courant continu convertie par le circuit convertisseur en énergie en courant alternatif.

3. Circuit convertisseur de puissance selon la revendication 1, ce circuit convertisseur étant un circuit convertisseur qui convertit l'énergie en courant alternatif fournie par l'alimentation en courant alternatif (E) en énergie en courant continu en actionnant un commutateur à semi-conducteur.

4. Circuit convertisseur de puissance selon la revendication 1, ce circuit convertisseur étant un circuit convertisseur de puissance direct qui convertit l'énergie en courant alternatif fournie par l'alimentation en courant alternatif (E) en énergie en courant alternatif dans laquelle au moins soit la tension, soit le courant, soit la fréquence diffère en actionnant un commutateur à semi-conducteur.

5. Circuit convertisseur de puissance selon la revendication 1, ce circuit convertisseur étant un circuit redresseur à diodes (130) qui convertit l'énergie en courant alternatif fournie par l'alimentation en courant alternatif (E) en énergie en courant continu,
ce circuit convertisseur de puissance comprenant en outre un circuit onduleur (13) qui convertit l'énergie en courant continu, qui est convertie par le circuit redresseur à diodes (130), et qui n'est pas passée à travers un condensateur capable de lisser les fluctuations de l'énergie en courant continu ou qui est passée à travers un condensateur avec de faibles capacités de lissage, en énergie en courant alternatif.

6. Circuit convertisseur de puissance selon l'une quelconque des revendications 1 à 5, dans lequel le circuit auxiliaire (15) est un circuit d'alimentation de commande.

7. Circuit convertisseur de puissance selon l'une quelconque des revendications 1 à 6, dans lequel une ligne qui connecte le filtre antiparasites (NF1) et le circuit convertisseur est plus courte qu'une ligne qui connecte une borne d'entrée au filtre antiparasites (NF1), cette borne d'entrée étant connectée à l'alimentation en courant alternatif (E) pour fournir une énergie en courant alternatif depuis l'alimentation en courant alternatif (E) dans le circuit convertisseur de puissance.

8. Climatiseur comprenant le circuit convertisseur de puissance selon les revendications 1 à 7.

9. Climatiseur selon la revendication 8, dans lequel le circuit convertisseur de puissance est un circuit convertisseur de puissance entraînant un compresseur et le circuit auxiliaire (15) comprend un circuit entraînant un ventilateur.

10. Climatiseur selon la revendication 8 ou 9, dans lequel le circuit convertisseur de puissance est un circuit convertisseur de puissance entraînant un compresseur et le circuit auxiliaire (15) comprend un circuit entraînant une section intérieure.
